(19) Europäisches Patentamt
European Patent Office
Office européen des brevets

(11) **EP 4 629 018 A1**

(12) **EUROPEAN PATENT APPLICATION**
published in accordance with Art. 153(4) EPC

(43) Date of publication:
**08.10.2025 Bulletin 2025/41**

(21) Application number: **23896958.8**

(22) Date of filing: **04.12.2023**

(51) International Patent Classification (IPC):
**G05D 1/43** (2024.01)

(52) Cooperative Patent Classification (CPC):
**G05D 1/242; G05D 1/243; G05D 1/43; G05D 1/633; G05D 1/644;** G05D 2109/12

(86) International application number:
**PCT/CN2023/136106**

(87) International publication number:
**WO 2024/114816 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.12.2022 CN 202211536565**

(71) Applicant: **Beijing Roborock Technology Co., Ltd. Beijing 102206 (CN)**

(72) Inventor: **LIU, Dan Beijing 102206 (CN)**

(74) Representative: **Cabinet Beau de Loménie 103, rue de Grenelle / CS 90800 75340 Paris Cedex 07 (FR)**

(54) **OBSTACLE AVOIDANCE MODULE, ROBOT, CONTROL METHOD, OBSTACLE AVOIDANCE METHOD, AND RELATED APPARATUS**

(57) An obstacle avoidance module (100), a robot, a control method, an obstacle avoidance method, and a related apparatus. The obstacle avoidance module (100) comprises: a transmitting assembly (110), wherein the transmitting assembly (110) is used for transmitting at least two lasers, and the at least two lasers are arranged perpendicular to each other; and a receiving assembly (120), wherein the receiving assembly (120) is used for collecting image information of the lasers on an object. The obstacle avoidance module (100) may be applied to a moving apparatus. Two perpendicularly-arranged lasers may be crosswise, and in the crosswise laser combination, one laser may be vertically arranged, and the other laser may be horizontally arranged. Image information formed by the lasers is collected by means of the receiving assembly (120), so as to accurately identify an obstacle on the ground. A vertical obstacle that is erected in front of an avoidance module may be identified, and on this basis, obstacles can be efficiently identified.

FIG. 1

## Description

The present application claims priority to Chinese Patent Application No. 202211536565.2, filed to CNIPA on December 02, 2022 and entitled "OBSTACLE AVOIDANCE MODULE, ROBOT, CONTROL METHOD, OBSTACLE AVOIDANCE METHOD AND RELATED APPARATUS", all of which are incorporated by reference herein.

## TECHNICAL FIELD

Embodiments of the present application relate to the field of obstacle avoidance technologies, in particular to relate to an obstacle avoidance module, an obstacle avoidance method, a computer-readable storage medium, a control apparatus, a robot and a control method of the robot.

## BACKGROUND ART

With the development of technologies, service robots are increasingly popular in various aspects of daily life, such as cleaning robots, meal delivery robots and commercial robots. All types of robots involve the functional requirement of active obstacle avoidance. The applicant found that all above functions require the robots to accurately avoid obstacles in complex environments, such as obstacles like shoes, chairs and weighing scales and so on. At present, the robots generally adopt one or a combination of more of the following solutions: a binocular ranging obstacle avoidance solution, a 3DTof obstacle avoidance solution and a structured light obstacle avoidance solution. However, the binocular ranging obstacle avoidance solution and the 3DTof obstacle avoidance solution suffer from low ranging accuracy, while the structured light obstacle avoidance solution incurs high cost.

## SUMMARY OF THE INVENTION

The present application aims at solving at least one of the technical problems existing in the related art or related art.

Therefore, the first aspect of the present application provides an obstacle avoidance module.

The second aspect of the present application provides an obstacle avoidance method.

The third aspect of the present application provides a computer-readable storage medium.

The fourth aspect of the present application provides a control apparatus.

The fifth aspect of the present application provides a robot.

The sixth aspect of the present application provides a control method of a robot.

In view of this, according to the first aspect of the embodiments of the present application, an obstacle avoidance module is provided and includes:

an emitting assembly, the emitting assembly is configured to emit at least two lasers, and at least two of the lasers being perpendicular to each other; and
a receiving assembly, the receiving assembly is configured to collect image information of the lasers on an object.

According to the second aspect of the embodiments of the present application, an obstacle avoidance method is provided, and applied to the obstacle avoidance module according to any of the above technical solutions. The obstacle avoidance method includes:

controlling the emitting assembly to emit at least two lasers perpendicular to each other; and
determining obstacle position information based on the image information of the lasers on the object.

According to the third aspect of the embodiments of the present application, a computer-readable storage medium is provided. The computer-readable storage medium stores a computer program to implement the obstacle avoidance method according to any of the above technical solutions.

According to the fourth aspect of the embodiments of the present application, a control apparatus is provided and includes:

a memory storing a computer program; and
a processor executing the computer program, wherein the processor, when executing the computer program, implements the obstacle avoidance method according to any of the above technical solutions.

According to the fifth aspect of the embodiments of the present application, a robot is provided and includes:

a robot body; and
the obstacle avoidance module according to any of the above technical solutions, the obstacle avoidance module being disposed on the robot body, wherein at least one of the lasers emitted by the obstacle avoidance module is disposed in parallel with a base of the robot body.

Compared with the related art, the present application at least includes the following beneficial effects. The obstacle avoidance module according to the embodiment of the present application includes an emitting assembly and a receiving assembly. The emitting assembly is configured to emit at least two lasers, and at least two of the lasers are perpendicular to each other. Based on this, the obstacle avoidance module according to the embodiment of the present application can be applied to a moving apparatus during use, the two lasers perpendicular to each other may be cross-shaped. In the cross-shaped laser combination, one laser may be vertically disposed, and the other laser may be horizontally disposed. The horizontally emitted laser may be horizontally projected on a travelling surface in front of a travelling direction of the moving apparatus. As the moving apparatus travels forward, the horizontally projected laser can traverse the travelling surface, while the vertically emitted laser may be vertically projected on a vertical surface in front of the travelling direction of the moving object. The receiving assembly collects the image information of the lasers on the object, the position of the obstacle can be determined through image comparison, and then the moving apparatus can be controlled to avoid the obstacle. As for the obstacle avoidance module according to the embodiment of the present application, the at least two lasers perpendicular to each other are emitted by the emitting assembly, and the emitted lasers can cover the horizontal direction and the vertical direction, so that the obstacles on the ground can be accurately identified; and at the same time, the vertical obstacles erected in front of the obstacle avoidance module can be identified, so that based on this, the obstacles can be efficiently identified.

## BRIEF DESCRIPTION OF THE DRAWINGS

Various other advantages and benefits will become clear and obvious to those skilled in the art by reading the following detailed descriptions of the preferred embodiments. The accompanying drawings are only for the purpose of illustrating the preferred embodiments, and are not considered as limiting the present application. Moreover, the same components are denoted by the same reference numerals throughout the accompanying drawings. In the figures:

FIG. 1 is a schematic structural block diagram of an obstacle avoidance module according to an embodiment provided by the present application;
FIG. 2 is a schematic structural block diagram of an emitting assembly of an obstacle avoidance module according to an embodiment provided by the present application;
FIG. 3 is a working principle diagram of a wave mirror unit of an obstacle avoidance module according to an embodiment provided by the present application;
FIG. 4 is a grid diagram of a filtering state of a filtering unit of an obstacle avoidance module according to an embodiment provided by the present application;
FIG. 5 is a schematic step flowchart of an obstacle avoidance method according to an embodiment provided by the present application;
FIG. 6 is a schematic diagram of an obstacle avoidance principle of an obstacle avoidance method according to an embodiment provided by the present application;

FIG. 7 is a working principle diagram of alternating emission of a first laser and a second laser of an obstacle avoidance method according to an embodiment provided by the present application;
FIG. 8 is a structural block diagram of a computer-readable storage medium according to an embodiment provided by the present application;
FIG. 9 is a structural block diagram of a control apparatus according to an embodiment provided by the present application;
FIG. 10 is a schematic structural block diagram of a robot according to an embodiment provided by the present application;
FIG. 11 is a schematic step flowchart of a control method of a robot according to an embodiment provided by the present application; and
FIG. 12 is a schematic step flowchart of a control method of a robot according to another embodiment provided by the present application.

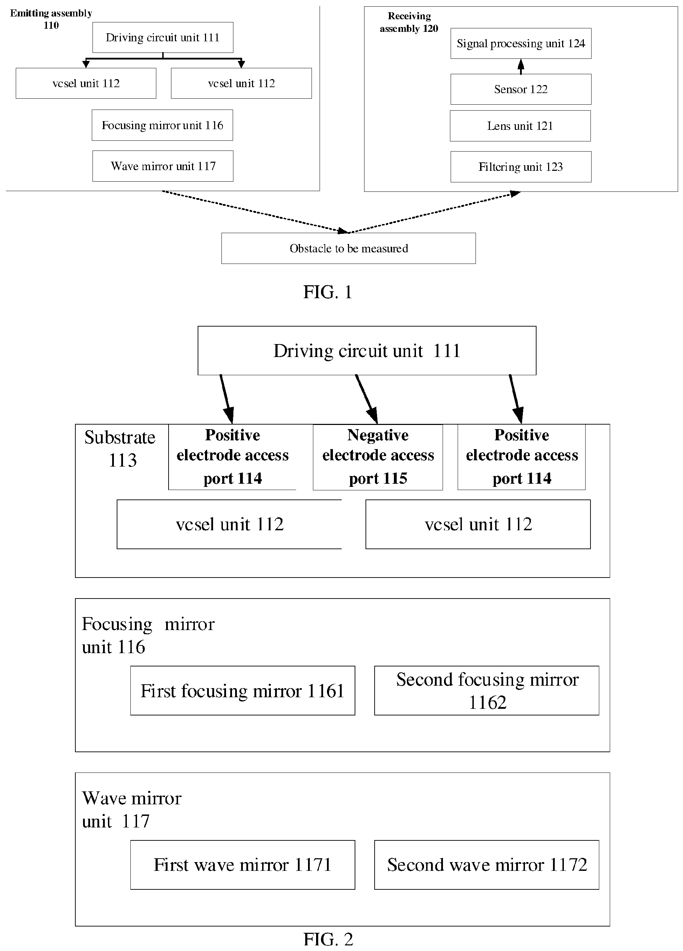

The corresponding relationship between the reference numerals and component names in FIGs. 1 to 3, 6 and 11 is as follows:

100 obstacle avoidance module;
110 emitting assembly, 120 receiving assembly;
111 driving circuit unit, 112 vcsel unit, 113 substrate, 114 positive electrode access port, 115 negative electrode access port, 116 focusing mirror unit, 117 wave mirror unit, 121 lens unit, 122 sensor, 123 filtering unit, 124 signal processing unit;
1161 first focusing mirror, 1162 second focusing mirror, 1171 first wave mirror, 1172 second wave mirror;
210 robot body.

## DETAILED DESCRIPTION

In order to better understand the above technical solutions, the technical solutions of the embodiments of the present application will be described in detail through the accompanying drawings and specific embodiments. It should be understood that the embodiments of the present application and the specific features in the embodiments are detailed illustrations of the technical solutions of the embodiments of the present application, instead of limitations on the technical solutions of the present application. In case of no conflict, the embodiments of the present application and the technical features in the embodiments may be combined with each other.

As shown in FIGs. 1 to 4, according to the first aspect of the embodiments of the present application, an obstacle avoidance module 100 is provided and includes an emitting assembly 110, the emitting assembly 110 is configured to emit at least two lasers, at least two of the lasers being perpendicular to each other; and a receiving assembly 120, the receiving assembly 120 is configured to collect image information of the lasers on the object.

The obstacle avoidance module 100 according to the embodiment of the present application includes the emitting assembly 110 and the receiving assembly 120. The emitting assembly 110 is configured to emit at least two lasers, and at least two of the lasers are perpendicular to each other. Based on this, the obstacle avoidance module 100 according to the embodiment of the present application can be applied to a moving apparatus during use, the two lasers perpendicular to each other may be cross-shaped, in the cross-shaped laser combination, one laser may be vertically disposed, and the other laser may be horizontally disposed. The horizontally emitted laser may be horizontally projected on a travelling surface in front of a travelling direction of the moving apparatus. As the moving apparatus travels forwards, the horizontally projected laser can traverse the travelling surface, while the vertically emitted laser may be vertically projected on a vertical surface in front of the travelling direction of the moving object. The receiving assembly collects the image information of the lasers on the object, the position of the obstacle can be determined through image comparison, and then the moving apparatus can be controlled to avoid the obstacle. As for the obstacle avoidance module 100 according to the embodiment of the present application, the at least two lasers perpendicular to each other are emitted by the emitting assembly 110, and the emitted lasers can cover the horizontal direction and the vertical direction, so that the obstacles on the ground can be accurately identified; and at the same time, the vertical obstacles erected in front of the obstacle avoidance module can be identified, so that based on this, the obstacles can be efficiently identified.

The present application considers that the obstacle avoidance methods in the traditional technology generally adopt one or a combination of more of the following solutions: a binocular ranging obstacle avoidance solution, a 3DTof obstacle avoidance solution and a structured light obstacle avoidance solution.

A basic principle of the binocular ranging obstacle avoidance solution is similar to that of human eyes. As for the principle, two parallel cameras are configured to photograph, and then, according to the difference (parallax) between two images, the distance of specific points is calculated using a series of complex algorithms. When the data is sufficient, a depth map may also be generated, and then the distance between the obstacle and the position of the machine is calculated to achieve intelligent obstacle avoidance. However, the binocular obstacle avoidance has high requirements on relative positions of the two cameras, and the calibration of binocular positions needs to achieve pixel-level accuracy, which causes great difficulty in production and manufacturing. The binocular principle requires finding feature points of the pictures photographed by the two cameras, then performing triangulation ranging after matching these feature points, but the obstacles without the feature points such as white walls cannot be matched, this leads to the failure of ranging and inability to meet the requirements of accurate obstacle avoidance. As for the obstacle avoidance module 100 according to the embodiment of the present application, at least two lasers are emitted, and at least two of the lasers are perpendicular to each other. In this way, laser projection can be carried out in the horizontal and vertical directions, then the image information of laser travels is collected by the receiving assembly 120, and the position of the obstacle can be determined through image comparison. The identification of the obstacle position in the embodiment of the present application does not depend on the binocular position calibration. Therefore, the mounting accuracy of the obstacle avoidance module 100 on the moving apparatus can be reduced, and high-precision obstacle avoidance can be met only by general mounting accuracy. Moreover, the receiving assembly 120 of the obstacle avoidance module 100 according to the embodiment of the present application only needs to collect the image information of the lasers on the object, which can reduce the requirements for the receiving assembly 120 and has low cost.

A principle of the 3DTof obstacle avoidance solution is as follows: an infrared light source is used to emit high-frequency light pulses to the object, then the light pulses reflected from the object is received, and the distance between the object to be measured and the camera is calculated by detecting the flight (round-trip) time and light speed of the light pulses. However, a TOF sensor 122 has high cost, and is generally more than 100 yuan with the resolution meeting the requirements of robot obstacle avoidance. Besides, limited by the TDC (nS level) accuracy of a timer, the precision of short-range ranging is poor, with a ranging error of generally about 10mm. Thus, it is likely to misjudge the reflected light as actual light in a reflective environment, resulting in an inconsistent light path, inaccurate time calculation and large ranging error. However, the obstacle avoidance module 100 according to the embodiment of the present application emits at least two lasers, and at least two of the lasers are perpendicular to each other, so that laser projection can be carried out in the horizontal and vertical directions, then the image information of the laser travels is collected by the receiving assembly 120, and the position of the obstacle can be determined by image comparison. The obstacle avoidance module 100 according to the embodiment of the present application does not depend on the flight time of rays, and the ranging accuracy is high.

As for the structured light obstacle avoidance solution, since in the ordinary binocular ranging, the light source is ambient light or an unencoded source such as white light, and image identification depends entirely on the feature points of the photographed object per se, matching has always been a difficulty in binocular ranging. The difference of the structured light ranging is that the projection light source is coded or characterized. In this way, the image of the encoded light source which projected onto the object and modulated by the depth of the object surface is photographed. Since the structured light source has many feature points or codes, many matching corner points or direct code words are provided, and the feature points can be conveniently matched. However, since the structured light of this solution is easily interfered by sunlight, and the power is limited under the premise of meeting the safety of human eyes, when the ambient sunlight is strong, it is likely to drown speckles and lead to ineffective ranging. The structured light is equivalent to adding a speckle projector based on binoculars, and the cost is high. In the embodiments of the present application, two lasers perpendicular to each other are configured to form a cross-shaped laser assembly, so that the power can be concentrated on two line lasers under the premise of safety power limitation of the human eyes, the power density of the lasers can be improved, a signal-to-noise ratio is improved, the strong light resistance is improved, and the detection accuracy is high.

The obstacle avoidance module 100 provided based on the embodiments of the present application gives consideration to both the ranging accuracy and the cost compared with the binocular ranging obstacle avoidance solution, the 3DTof obstacle avoidance solution and the structured light obstacle avoidance solution in the conventional technology.

It can be understood that the obstacle avoidance module 100 according to the embodiment of the present application is particularly suitable for being assembled on a robot, especially on a service robot.

As shown in FIGs. 1 to 4, in one feasible embodiment, the emitting assembly 110 includes a driving circuit unit 111; and at least two vcsel units 112. The driving circuit unit 111 is connected to the vcsel units 112, and the vcsel units 112 are configured to emit the lasers.

In this technical solution, the structure composition of the emitting assembly 110 is further provided. The emitting assembly 110 may include the driving circuit unit 111 and at least two vcsel units 112 (vertical cavity surface emitting laser devices), each vcsel unit 112 may emit one laser, and the at least two vcsel units 112 are driven by one driving circuit unit 111, so that multi-line time-sharing emission of line lasers can be achieved, and at the same time, the fields of view in both horizontal and vertical directions are taken into account, and the range of obstacle avoidance blind areas is reduced.

It can be understood that the driving circuit unit 111 is configured to supply the vcsel units 112 with an appropriate driving voltage and current to enable the vcsel units 112 to perform photoelectric conversion. A luminous intensity of the emitting assembly 110 is linearly related to the driving current. Therefore, by controlling the driving current of the driving circuit unit 111, the response distance of the emitting assembly 110 and that of the receiving assembly 120 can be effectively controlled, so as to achieve the function of long-distance obstacle detection of the robot.

As shown in FIGs. 1 to 4, in a feasible embodiment, the emitting assembly 110 further includes a substrate 113, the at least two vcsel units 112 being disposed on the substrate 113; positive electrode access ports 114 disposed on the substrate 113, each vcsel unit 112 being connected with at least one positive electrode access port 114; and a negative electrode access port 115 disposed on the substrate 113 and connected to all the vcsel units 112, wherein the driving circuit unit 111 is configured to be connected to the positive electrode access ports 114 and the negative electrode access port 115.

In this technical solution, the emitting assembly 110 may also include the substrate 113, and the substrate 113 may play a role of integrating a plurality of vcsel units 112, so that one obstacle avoidance module 100 can emit at least two lasers, and each robot can achieve the obstacle avoidance with only one obstacle avoidance module 100, which can further reduce the obstacle avoidance cost of the robot.

The plurality of vcsel units 112 shares one negative electrode access port 115, and each vcsel unit 112 is equipped with at least one positive access port 114, so that the powering-on of the vcsel unit 112 is more convenient, and at the same time, it is convenient to control the start and stop of each vcsel unit 112.

In some examples, the emitting apparatus contains two vcsel units 112. The vcsel unit 112 may be in an infrared band of 940 nm, 850 nm, 808 nm, etc. Key indicators of the vcsel unit 112 include a luminous intensity at rated current, a divergence angle FOV, and an overall dimension. The luminous intensity affects a sensing distance, and the divergence angle affects a line width of the line laser. If the line width is too narrow to occupy more than one pixel in the image, a centroid cannot be accurately calculated. If the line width is too wide, the energy density is likely to decrease. When a dark color obstacle is detected, the reflected energy will be lower, and effective detection cannot be performed. Therefore, the line width of the vcsel unit 112 is 1 to 5 mm at the focusing position, which can improve the detection accuracy. The overall dimension of the vcsel unit 112 mainly affects the structural design. The smaller the structure, the easier it is to miniaturize the device, and emitting and receiving distances can be indirectly increased, improving the accuracy of triangulation ranging. In this embodiment, a wavelength is 850 nm, a FOV is 18°, and Vcsel chips each having the size $\varphi$ of 5 mm are arranged on a circular ceramic substrate, so that the response distance, energy density and miniaturization of the obstacle avoidance module 100 can all be considered.

As shown in FIGs. 1 to 4, in a feasible embodiment, the emitting assembly 110 further includes a focusing mirror unit 116 for focusing the lasers emitted from the vcsel units 112; and a wave mirror unit 117 disposed on one side of the focusing mirror unit 116 away from the vcsel units 112.

In this technical solution, the emitting assembly 110 may also include the focusing mirror unit 116, the focusing mirror unit 116 may focus the laser emitted by the vcsel unit 112, and the line width of the laser emitted by the vcsel unit 112 can be adjusted by a focal length of the focusing mirror unit 116, so that the application range of the obstacle avoidance module 100 can be improved.

In this technical solution, the focusing mirror unit 116 can further focus a circular spot size emitted by the vcsel unit 112, the line width of the line laser is flexibly controlled by setting the focal length of the focusing mirror unit 116 and adjusting an object distance of the vcsel, and the focusing mirror unit 116 may be spherical or aspherical. It is further considered that since the divergence angle of the vcsel unit 112 is smaller, the focusing mirror unit 116 is preferably a spherical mirror, which can improve the application range of the obstacle avoidance module 100 and improve the cost performance.

In this technical solution, the emitting assembly 110 may also include the wave mirror unit 117, the laser that has been focused is projected out through the wave mirror unit 117, and the wave mirror unit 117 can linearize the spot laser, so that the laser can be projected out in a liner shape. Specifically, under the premise of including at least two lasers perpendicular to each other, the two lasers perpendicular to each other may be projected on the travelling surface and the vertical surface of the travelling direction of the robot, so that the obstacles can be better detected.

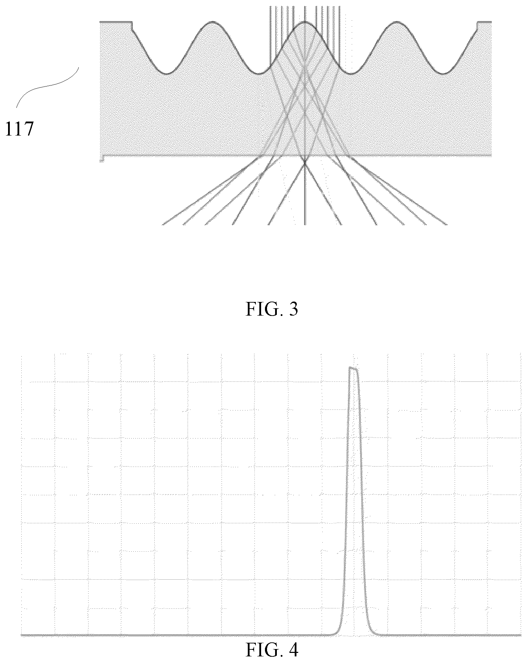

As shown in FIG. 3, in some examples, a circular spot of the laser that has been focused passes through the wave mirror, and a plurality of rays passing through peaks and valleys are vertically incident to the line center. The rays passing through 0.5 peak-valley depth have the maximum emergent angle and are emergent to the line edges. With the rays passing through the peaks (valleys) and the 0.5 peak-valley depth, multiple waves are superimposed and emergent to the line centers and line edges according to different positions, thus forming the line. As long as wave surfaces perpendicular to each other at 90° are simultaneously designed on the wave mirror, the vertical and horizontal cross double-line lasers can be achieved.

In this technical solution, through the arrangement of a lens unit 121, the line laser reflected by the obstacle can be imaged, which is convenient for collecting a clear image.

In some examples, each vcsel unit corresponds to at least one focusing mirror and at least one wave mirror. As shown in FIG. 2, the focusing mirror unit 116 includes a first focusing mirror 1161 and a second focusing mirror 1162, and the wave mirror unit 117 includes a first wave mirror 1171 and a second wave mirror 1172. Due to such an arrangement, the emitted laser can be better focused and the spot laser is linearized.

As shown in FIG. 1, in one feasible embodiment, the receiving assembly 120 includes the lens unit 121; a sensor 122 for collecting the image information through the lens unit 121; and a filtering unit 123 disposed on one side of the lens unit 121 away from the sensor 122.

In this technical solution, further the structural composition of the receiving assembly 120 is provided . The receiving assembly 120 may include the lens unit 121, the sensor 122 and the filtering unit 123. When the image information is collected by the receiving assembly 120, the light first passes through the filtering unit 123, the filtering unit 123 may only allow the light of a corresponding wavelength to pass through, while the light of other wavelengths is blocked, so as to prevent serious stray light in the image caused by receiving of ambient light, and improve the signal-to-noise ratio of the system.

In some examples, as shown in FIG. 4, where the abscissa is the wavelength and the ordinate is the signal receiving intensity in FIG. 4, the filtering unit 123 may be a narrow-band filter that can perform filtering, is preferably a 850nm $\pm$ 10nm narrow-band filter and is more suitable for the laser emitted by the vcsel unit 112.

In some examples, the sensor 122 may be a sensor chip, and the lens unit 121 is configured to image the line laser reflected by the obstacle on the sensor chip. Key indicators of the lens unit 121 include a field of view angle, F#, a focal length, distortion, etc. The lens unit 121 in the present embodiment includes a lens with a field of view angle greater than or equal to 120°, which can detect more obstacle ranges. The focal length of the lens unit 121 may be 1 mm to 2 mm, preferably 1.6 mm. According to a triangulation ranging equation, the greater the focal length, the higher the ranging accuracy. F# is 1.5 to 3, preferably 2.2. The reason for such an arrangement is to consider the fact that under the condition of the constant focal length, the smaller the F#, the larger the lens aperture, and the greater the light input. The light input can be guaranteed by F# being 1.5 to 3, and the collecting accuracy of the image information can be improved. The distortion is less than or equal to 2.5%; and the smaller the distortion, the better. If the distortion is too large, it will easily affect the ranging accuracy at the edge of the system. If the original distortion is too large, the distortion can also be calibrated by internal parameter calibration, but the effective FOV will be sacrificed.

In this technical solution, the sensor 122 may be a sensor photosensitive chip, and main indicators of the sensor photosensitive chip include a resolution, an exposure mode, a pixel size, photosensitive efficiency, etc. According to the triangulation ranging equation, the higher the resolution, the higher the ranging accuracy, but the cost will also increase. The exposure mode is classified into rolling exposure and global exposure, and the global exposure is more suitable for fast moving scenarios. Since the present application is applied to a moving robot and requires strict timing coordination with the line lasers, in this embodiment, the sensor with a VGA resolution and the global exposure mode is adopted. The larger the pixel size, the better the photosensitive performance. In the present embodiment, the sensor photosensitive chip adopts the pixel size of 3 to 5 $\mu$ m, preferably 3.75 $\mu$m. The higher the photosensitive efficiency, the higher the photoelectric conversion efficiency under the condition of the same emitting power, and thus, the brighter the line laser presented in the image, which is more conducive to the detection of dark materials and long-distance ranging. Therefore, this embodiment adopts the sensor with the photosensitive efficiency greater than or equal to 40%.

As shown in FIG. 1, in a feasible embodiment, the receiving assembly 120 further includes a signal processing unit 124 connected to the sensor 122 and configured to convert a photoelectric signal into a digital signal.

In this technical solution, the receiving assembly 120 may also include the signal processing unit 124, and the photoelectric signal can be converted into the digital signal through the arrangement of the signal processing unit 124, which is convenient for a processor to calculate the distance based on the information received by the receiving assembly 120.

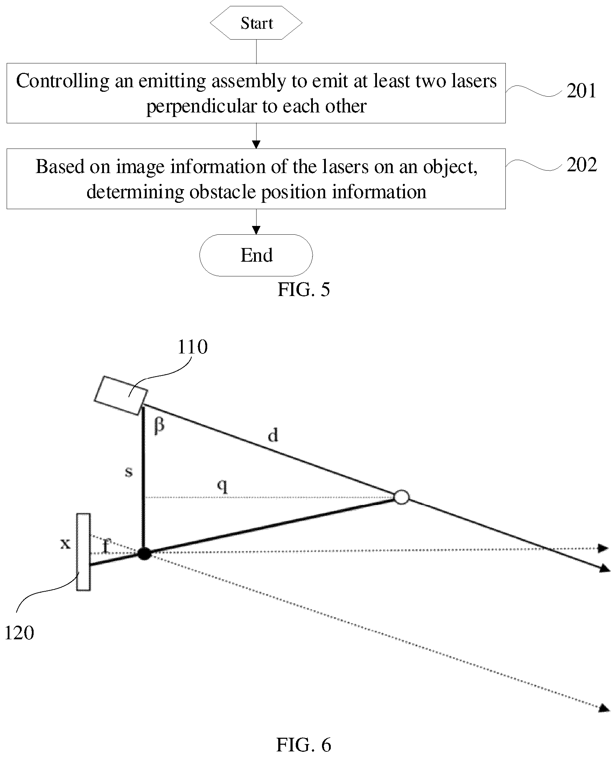

As shown in FIG. 5, according to the second aspect of the embodiments of the present application, an obstacle avoidance method is provided and is applied to the obstacle avoidance module in any of the above technical solutions. The obstacle avoidance method includes:

In step 201, the emitting assembly is controlled to emit at least two lasers perpendicular to each other. In step 202, the obstacle position information is determined based on the image information of the lasers on the object.

As for the obstacle avoidance method according to the embodiment of the present application, at least two lasers perpendicular to each other are emitted by the obstacle avoidance module, the two lasers perpendicular to each other may be cross-shaped. In the cross-shaped laser combination, one laser may be vertically disposed, and the other laser may be horizontally disposed. The horizontally emitted laser may be horizontally projected on a travelling surface in front of a travelling direction of the moving apparatus. As the moving apparatus travels forward, the horizontally projected laser can traverse the travelling surface, while the vertically emitted laser may be vertically projected on a vertical surface in front of the travelling direction of the moving object. The receiving assembly collects the image information of the lasers on the object, and the obstacle position information can be determined through image comparison. In the whole obstacle avoidance process, there is no need to depend on binocular position calibration and ray flight time, the obstacle avoidance cost can be reduced, and at the same time, the accuracy of the obstacle position information is improved.

In a feasible embodiment, the step of controlling the emitting assembly to emit at least two lasers perpendicular to each other includes: controlling the emitting assembly to alternately emit a first laser and a second laser; and under the condition that the emitting assembly emits the first laser and the second laser, controlling the receiving assembly to be turned on, wherein the first laser is disposed horizontally and the second laser is disposed vertically.

In the technical solution, the step of controlling the emitting assembly to emit at least two lasers perpendicular to each other is further provided, and the first laser and the second laser are disposed vertically and emitted alternately. Due to such an arrangement, simultaneous emission of the first laser and the second laser can be avoided, confusion between the horizontal laser and the vertical laser is avoided, and the detection accuracy can be further improved.

It can be understood that when there is a plurality of lasers, the plurality of lasers are emitted at the same time intervals.

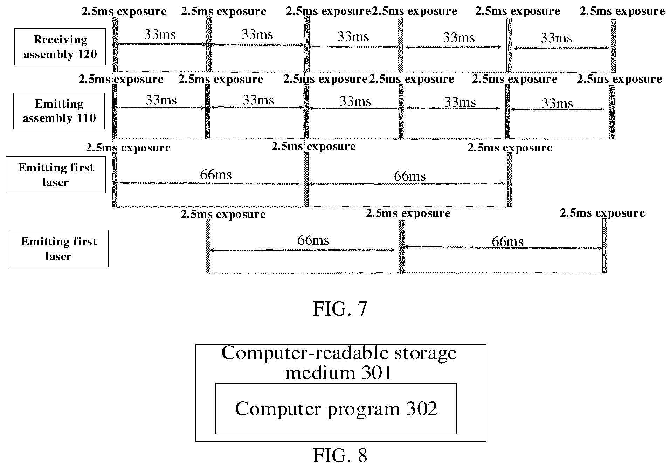

As shown in FIG. 7, in some examples, the emission interval of the first laser and the second laser is greater than or equal to 33 ms, the receiving assembly is started synchronously while the emitting assembly emits the lasers, and the emission duration of the first laser and the second laser and the starting duration of the receiving assembly are greater than or equal to 2.5 ms. Due to such an arrangement, the horizontal line laser and the vertical line laser are emitted at intervals according to a synchronization signal. The emission time can be strictly matched with exposure time of the receiving assembly, which can not only ensure the effective brightness of the line lasers in the image, but also shorten the overall emission time of the line lasers to meet the safety standards of the lasers for the human eyes.

In a feasible embodiment, the step of determining the obstacle position information based on the image information of the lasers on the object includes:

determining the distance between the obstacle and the obstacle avoidance module by the following equation:

$$q=fs/x,$$

wherein q is the distance between the obstacle and the obstacle avoidance module, f is a focal length of the receiving assembly, s is the distance between the center of the emitting assembly and the center of the receiving assembly, and x is the distance from the pixel point on the sensor to the center thereof.

In the technical solution, the further details of the step of determining the obstacle position information are provided, and the distance between the obstacle and the obstacle avoidance modules is determined based on the focal length of the receiving assembly, the distance between the emitting assembly and the receiving assembly and a detection result of the sensor, so that the position of the obstacle can be accurately determined, and it is convenient for obstacle avoidance of the device or apparatus equipped with the obstacle avoidance module.

In some examples, the lasers emitted by the obstacle avoidance module are combined with triangulation ranging to calculate the obstacle position information. The specific principle is as shown in FIG. 6. According to the similar triangle, the measured distance q=fs/x, and it is convenient for a processor to process a detection result of the obstacle avoidance module and accurately determine the position of the obstacle.

As shown in FIG. 8, according to the third aspect of the embodiments of the present application, a computer-readable storage medium 301 is provided, and a computer program 302 is stored in the computer-readable storage medium 301, so as to achieve the obstacle avoidance method according to any of the above technical solutions.

The computer-readable storage medium 301 according to the embodiment of the present application achieves the obstacle avoidance method in any of the above technical solutions. Therefore, the computer-readable storage medium 301 has all the beneficial effects of the above obstacle avoidance method.

It can be understood that the computer-readable storage medium may be non-volatile or volatile.

As for the computer-readable storage medium 301 according to the embodiment of the present application, at least two lasers perpendicular to each other are emitted by the obstacle avoidance module, the two lasers perpendicular to each other may be cross-shaped. In the cross-shaped laser combination, one laser may be vertically disposed, and the other laser may be horizontally disposed. The horizontally emitted laser may be horizontally projected on a travelling surface in front of a travelling direction of the moving apparatus. As the moving apparatus travels forward, the horizontally projected laser can traverse the travelling surface, while the vertically emitted laser may be vertically projected on a vertical surface in front of the travelling direction of the moving object. The receiving apparatus collects the image information of the lasers on the object, and the obstacle position information can be determined through image comparison. In the whole obstacle avoidance process, there is no need to depend on binocular position calibration and ray flight time, the obstacle avoidance cost can be reduced, and at the same time, the accuracy of the obstacle position information is improved.

Based on such an understanding, the technical solution of the present application may be embodied in the form of a software product, and the software product may be stored in a non-volatile storage medium (a CD-ROM, a USB flash drive, a mobile hard disk, etc.) and includes several instructions to enable a computer device (a personal computer, a server, or a network device, etc.) to execute the method described in various implementation scenarios of the present application.

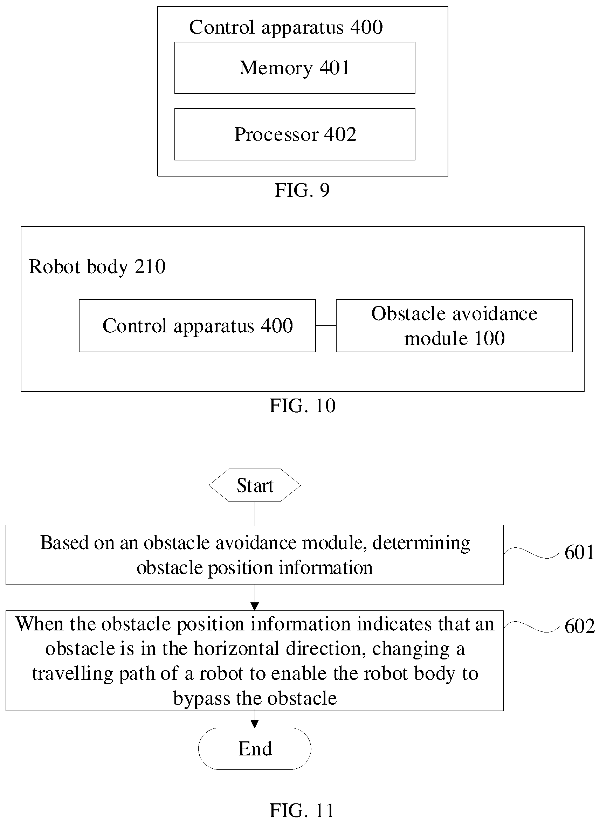

As shown in FIG. 9, according to the fourth aspect of the embodiments of the present application, a control apparatus 400 is provided and includes a memory 401 storing a computer program; and a processor 402 executing the computer program, wherein the processor 402, when executing the computer program, implements the obstacle avoidance method in any of the above technical solutions.

The control apparatus 400 according to the embodiment of the present application achieves the obstacle avoidance method in any of the above technical solutions. Therefore, the control apparatus 400 has all the beneficial effects of the above obstacle avoidance method.

As for the control apparatus 400 according to the embodiment of the present application, at least two lasers perpendicular to each other are emitted by the obstacle avoidance module, and the two lasers perpendicular to each other may be cross-shaped. In the cross-shaped laser combination, one laser may be vertically disposed, and the other laser may be horizontally disposed. The horizontally emitted laser may be horizontally projected on a travelling surface in front of a travelling direction of the moving apparatus. As the moving apparatus travels forward, the horizontally projected laser can traverse the travelling surface, while the vertically emitted laser may be vertically projected on a vertical surface in front of the travelling direction of the moving object. The receiving apparatus collects the image information of the lasers on the object, and the obstacle position information can be determined through image comparison. In the whole obstacle avoidance process, there is no need to depend on binocular position calibration and ray flight time, the obstacle avoidance cost can be reduced, and at the same time, the accuracy of the obstacle position information is improved.

In some examples, the control apparatus 400 may further include a user interface, a network interface, a camera, a radio frequency (RF) circuit, a sensor, an audio circuit, a WI-FI module, etc. The user interface may include a display screen (Display), an input unit such as a keyboard(Keyboard), etc. The optional user interface may also include a USB interface, a card reader interface, etc. The network interface may optionally include a standard wired interface, a wireless interface (such as a WI-FI interface), etc.

In an exemplary embodiment, the control apparatus may also include an input/output interface and a display device, wherein the respective functional units may be communicated with each other through a bus. The memory stores the computer program and the processor is configured to execute the program stored in the memory and execute the method in the above embodiment.

The above storage medium may also include an operating system and a network communication module. The operating system is a program managing hardware and software resources of a physical device used for implementing the above method, and supporting the operation of information processing programs and other software and/or programs. The network communication module is configured to implement the communication between respective components in the storage medium and the communication with other hardware and software in the information processing physical device.

Through the illustrations of the above embodiments, those skilled in the art can clearly understand that the present application can be implemented by means of software and a necessary general hardware platform, or by hardware.

The present application is described with reference to flowcharts and/or block diagrams of the method, device (system) and computer program product according to embodiments of the present application. It should be understood that each flow and/or block in the flowcharts and/or block diagrams, and combinations of the flow and/or block in the flowcharts and/or block diagrams may be implemented by computer program instructions. These computer program instructions may be provided to a processor of a general-purpose computer, a special-purpose computer, an embedded computer or other programmable data processing devices to produce a machine, so that the instructions executed by the processor of the computer or other programmable data processing devices produce an apparatus for implementing the functions specified in one or more flows of the flowcharts and/or in one or more blocks of the block diagrams.

As shown in FIG. 10, according to the fifth aspect of the embodiments of the present application, a robot is provided and includes: a robot body 210, and the obstacle avoidance module 100 in any of the above technical solutions. The obstacle avoidance module 100 is disposed on the robot body 210; at least one of the lasers emitted by the obstacle avoidance module 100 is disposed in parallel with a base of the robot body 210.

The robot according to the embodiment of the present application has the obstacle avoidance module 100 in the above technical solution and thus has all the beneficial effects of the obstacle avoidance module 100 in the above technical solution.

As for the robot according to the embodiment of the present application, at least one of the lasers emitted by the obstacle avoidance module 100 is disposed in parallel with the base of the robot body 210. Besides, at least one laser is disposed perpendicular to the horizontal direction, that is, the other laser may be disposed vertically. The laser disposed in parallel with the base direction is emitted in the horizontal direction, and the laser emitted in the horizontal direction may be projected horizontally on the travelling surface in front of the travelling direction of the robot body 210. As the moving apparatus travels forward, the horizontally projected laser can traverse the travelling surface, while the vertically emitted laser may be vertically projected on the vertical surface in front of the travelling direction of the moving object. The receiving apparatus collects the image information of the lasers on the object, the position of the obstacle can be determined through image comparison, and the robot body 210 can be further controlled to avoid the obstacle. As for the robot according to the embodiment of the present application, at least two lasers perpendicular to each other are emitted through the emitting assembly 110, and the emitted lasers can cover the horizontal direction and the vertical direction, so that the obstacles on the ground can be accurately identified. At the same time, the vertical obstacles erected in front of the avoidance module can be identified, so that based on this, the obstacles can be efficiently identified, and it is convenient for the robot body 210 to avoid the obstacles efficiently.

As shown in FIG. 10, in a feasible embodiment, the robot further includes the control apparatus 400 according to any of the above technical solutions.

In this technical solution, the robot may also include the control apparatus in the above technical solution. Therefore, the robot has all the beneficial effects of the control apparatus in the above technical solution, which will not be repeated here.

As shown in FIG. 11, according to the sixth aspect of the embodiment of the present application, a control method of a robot is provided and is applied to the robot according to any of the above technical solutions, and the control method includes the following steps.

In step 601, the obstacle position information is determined based on the obstacle avoidance module. It can be understood that through the obstacle avoidance module, the obstacle can be identified in both horizontal and vertical directions.

In step 602, when the obstacle position information indicates that an obstacle is in the horizontal direction, a travelling path of the robot is changed to enable the robot body to bypass the obstacle. It can be understood that when the obstacle avoidance module identifies the obstacle in the horizontal direction, it means that the obstacle is located in front of the travelling direction of the robot body and the height of the obstacle is lower. In this case, the obstacle can be avoided by changing the travelling direction of the robot.

When the obstacle position information indicates that an obstacle is in the vertical direction, the robot body is controlled to turn around and travel. It can be understood that when the obstacle avoidance module identifies the obstacle in the vertical direction, it means that the obstacle is located in front of the travelling direction of the robot body, and the height of the obstacle is higher. In this case, if the robot continues to travel forward, it is likely to hit the obstacle. Therefore, the robot body can be controlled to turn around to avoid the obstacle.

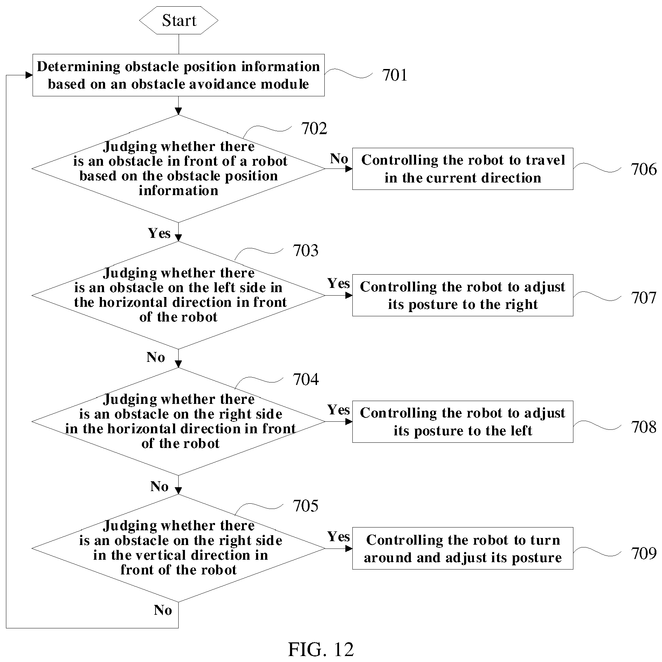

As shown in FIG. 12, in some examples, the control method of a robot may include:

    step 701: determining the obstacle position information based on the obstacle avoidance module;

step 702: judging whether there is an obstacle in front of the robot based on the obstacle position information, if so, executing step 703, otherwise executing step 706;

step 703: judging whether there is an obstacle on the left side in the horizontal direction in front of the robot, if so, executing step 707, otherwise executing step 704;

step 704: judging whether there is an obstacle on the right side in the horizontal direction in front of the robot, if so, executing step 708, otherwise executing step 705;

step 705: judging whether there is an obstacle on the right side in the vertical direction in front of the robot, if so, executing step 709, otherwise executing step 701;

step 706: controlling the robot to travel in the current direction;

step 707: controlling the robot to adjust its posture to the right;

step 708: controlling the robot to adjust its posture to the left; and

step 709: controlling the robot to turn around and adjust its posture.

By combining the control method of a robot according to the embodiment of the present application with the obstacle avoidance module, at least two lasers perpendicular to each other are emitted by the emitting assembly, and the emitted lasers can cover the horizontal direction and the vertical direction, so that the obstacles on the ground can be accurately identified. At the same time, the vertical obstacles erected in front of the obstacle avoidance module can be identified, so that based on this, the obstacles can be efficiently identified.

The terms such as "first", "second" and "third" in the present application are merely for a descriptive purpose, and shall not be construed as indicating or implying their relative importance; and the term "a plurality of" means two or more, unless otherwise clearly specified. The terms "mounted", "connected", "coupled", "fixed" and the like should be understood in a broad sense. For example, "fixation" may be a fixed connection, or a detachable connection or an integral connection; may be a direct connection, or an indirect connection via an intermediate medium. For those of ordinary skill in the art, the specific meanings of the above terms in the present application can be understood in accordance with specific conditions.

It should be understood that, in the description of the present application, directional or positional relationships indicated by the terms such as "upper", "lower", "left", "right", "front", "rear" and the like are directional or positional relationships as shown in the drawings, are only for the purposes of the ease in describing the present application and simplification of its descriptions, but not for indicating or implying that the specified device or element has to be located in a specific direction, or structured or operated in a specific direction. Therefore, these directional or positional relationships should not be understood as limitations to the present application.

In the descriptions of the present specification, the descriptions of referring terms such as "an embodiment", "some embodiments", "specific embodiments" and the like mean that specific features, structures, materials or characteristics described in combination with the embodiment(s) or example(s) are included in at least one embodiment or example of the present application. In the present specification, the schematic representation of the terms described above does not necessarily refer to the same embodiment or example. Moreover, the described specific feature, structure, material, or characteristic can be combined in an appropriate manner in any one or more embodiments or examples.

The above only describes preferred embodiments of the present application, and are not intended to limit the same. A person of ordinary skill in the art should understand that various modifications and variations can be made to the present application. Any modifications, equivalent replacements, improvements, etc. made without departing from the spirit and principle of the present application shall be included in the scope of protection of the present application.

## Claims

1. An obstacle avoidance module , comprising:

   an emitting assembly, the emitting assembly being configured to emit at least two lasers, and at least two of the lasers being perpendicular to each other; and
   a receiving assembly, the receiving assembly being configured to collect image information of the lasers on an object.

2. The obstacle avoidance module according to claim 1, wherein the emitting assembly comprises:

   a driving circuit unit; and
   at least two vcsel units, the driving circuit unit being connected to the vcsel units, and the vcsel units being configured to emit the lasers.

3. The obstacle avoidance module according to claim 2, wherein the emitting assembly further comprises:

   a substrate, on which the at least two vcsel units are disposed;
   positive electrode access ports, disposed on the substrate, each the vcsel unit being connected with at least one positive electrode access port; and
   a negative electrode access port, disposed on the substrate, and connected to all the vcsel units,

wherein the driving circuit unit is configured to be connected to the positive electrode access ports and the negative electrode access port.

4. The obstacle avoidance module according to claim 2, wherein the emitting assembly further comprises:

a focusing mirror unit, configured to focus the lasers emitted from the vcsel units; and a wave mirror unit, disposed on one side of the focusing mirror unit away from the vcsel units.

5. The obstacle avoidance module according to any one of claims 1 to 4, wherein the receiving assembly comprises:

a lens unit;
a sensor, configured to collect the image information through the lens unit; and
a filtering unit, disposed on one side of the lens unit away from the sensor.

6. The obstacle avoidance module according to claim 5, wherein the receiving assembly further comprises: a signal processing unit, connected to the sensor and configured to convert a photoelectric signal into a digital signal.

7. An obstacle avoidance method, applied to the obstacle avoidance module according to any one of claims 1 to 6, and comprising:

controlling the emitting assembly to emit at least two lasers perpendicular to each other; and
determining obstacle position information based on the image information of the lasers on the object.

8. The obstacle avoidance method according to claim 7, wherein the step of controlling the emitting assembly to emit at least two lasers perpendicular to each other comprises:

controlling the emitting assembly to alternately emit a first laser and a second laser; and
controlling the receiving assembly to be turned on under the condition that the emitting assembly emits the first laser and the second laser, wherein the first laser is disposed horizontally and the second laser is disposed vertically.

9. The obstacle avoidance method according to claim 7, wherein the step of determining the obstacle position information based on the image information of the lasers on the object comprises:

determining a distance between the obstacle and the obstacle avoidance module by the following equation:

$$q=fs/x$$

wherein q is the distance between the obstacle and the obstacle avoidance module, f is a focal length of the receiving assembly, s is a distance between a center of the emitting assembly and a center of the receiving assembly, and x is a distance from a pixel point on a sensor of the obstacle avoidance module to a center of the sensor.

10. A computer-readable storage medium , wherein, the computer-readable storage medium stores a computer program to implement the obstacle avoidance method according to any one of claims 7 to 9.

11. A control apparatus, comprising:

a memory, storing a computer program; and
a processor, executing the computer program, wherein the processor, when executing the computer program, implements the obstacle avoidance method according to any one of claims 7 to 9.

12. A robot, comprising:

a robot body; and
the obstacle avoidance module according to any one of claims 1 to 6, the obstacle avoidance module being disposed on the robot body, wherein at least one of the lasers emitted by the obstacle avoidance module is disposed in parallel with a base of the robot body.

13. The robot according to claim 12, further comprising: the control apparatus according to claim 11.

14. A control method of a robot, applied to the robot according to claim 12 or 13, and comprising:

determining the obstacle position information based on the obstacle avoidance module;
when the obstacle position information indicates that an obstacle is in a horizontal direction, changing a travelling path of the robot to enable the robot body to bypass the obstacle; and
when the obstacle position information indicates that an obstacle is in a vertical direction, controlling the robot body to turn around and travel.

**Emitting assembly 110**

Driving circuit unit 111

vcsel unit 112 | vcsel unit 112

Focusing mirror unit 116

Wave mirror unit 117

**Receiving assembly 120**

Signal processing unit 124

Sensor 122

Lens unit 121

Filtering unit 123

Obstacle to be measured

FIG. 1

Driving circuit unit 111

| Substrate 113 | **Positive electrode access port 114** | **Negative electrode access port 115** | **Positive electrode access port 114** |

vcsel unit 112 | vcsel unit 112

Focusing mirror unit 116

First focusing mirror 1161 | Second focusing mirror 1162

Wave mirror unit 117

First wave mirror 1171 | Second wave mirror 1172

FIG. 2

117

FIG. 3

FIG. 4

FIG. 5

FIG. 6

**2.5ms exposure    2.5ms exposure       2.5ms exposure 2.5ms exposure    2.5ms exposure       2.5ms exposure**

| Receiving assembly 120 | 33ms | 33ms | 33ms | 33ms | 33ms |

**2.5ms exposure    2.5ms exposure       2.5ms exposure 2.5ms exposure    2.5ms exposure       2.5ms exposure**

| Emitting assembly 110 | 33ms | 33ms | 33ms | 33ms | 33ms |

**2.5ms exposure                 2.5ms exposure                 2.5ms exposure**

| Emitting first laser | 66ms | 66ms |

**2.5ms exposure                 2.5ms exposure                 2.5ms exposure**

| Emitting first laser | 66ms | 66ms |

FIG. 7

Computer-readable storage
medium 301

Computer program 302

FIG. 8

Control apparatus 400

Memory 401

Processor 402

FIG. 9

Robot body 210

Control apparatus 400 —— Obstacle avoidance module 100

FIG. 10

Start

Based on an obstacle avoidance module, determining obstacle position information — 601

When the obstacle position information indicates that an obstacle is in the horizontal direction, changing a travelling path of a robot to enable the robot body to bypass the obstacle — 602

End

FIG. 11

Start

Determining obstacle position information based on an obstacle avoidance module — 701

Judging whether there is an obstacle in front of a robot based on the obstacle position information — 702

No → Controlling the robot to travel in the current direction — 706

Yes ↓

Judging whether there is an obstacle on the left side in the horizontal direction in front of the robot — 703

Yes → Controlling the robot to adjust its posture to the right — 707

No ↓

Judging whether there is an obstacle on the right side in the horizontal direction in front of the robot — 704

Yes → Controlling the robot to adjust its posture to the left — 708

No ↓

Judging whether there is an obstacle on the right side in the vertical direction in front of the robot — 705

Yes → Controlling the robot to turn around and adjust its posture — 709

No

FIG. 12

## INTERNATIONAL SEARCH REPORT

| | International application No. |
|---|---|
| | **PCT/CN2023/136106** |

**A. CLASSIFICATION OF SUBJECT MATTER**

G05D1/43(2024.01)i

According to International Patent Classification (IPC) or to both national classification and IPC

**B. FIELDS SEARCHED**

Minimum documentation searched (classification system followed by classification symbols)

IPC:G05D,G01C,G01S,H01S,A47L

Documentation searched other than minimum documentation to the extent that such documents are included in the fields searched

Electronic data base consulted during the international search (name of data base and, where practicable, search terms used)

CNABS, CNTXT, VEN, CNKI, ENTXTC, WPABSC: 障碍, 避障, 激光, 水平, 垂直, 竖直, 发射, 接收, 图像, 透镜, 距, 机器人, obstacle, laser, horizontal, vertical, emitting, project, receive, image, picture, lens, distance, robot

**C. DOCUMENTS CONSIDERED TO BE RELEVANT**

| Category* | Citation of document, with indication, where appropriate, of the relevant passages | Relevant to claim No. |
|---|---|---|
| X | CN 113376655 A (SHENZHEN CAMSENSE TECHNOLOGIES CO., LTD.) 10 September 2021 (2021-09-10)<br>    description, paragraphs 0054-0130, and figures 1-9 | 1-14 |
| X | CN 110353583 A (ZHUICHUANG TECHNOLOGY (SUZHOU) CO., LTD.) 22 October 2019 (2019-10-22)<br>    description, paragraph 0133, and figures 1-14 | 1-14 |
| X | CN 112155487 A (ZHUICHUANG TECHNOLOGY (SUZHOU) CO., LTD.) 01 January 2021 (2021-01-01)<br>    description, paragraphs 0025-0075, and figures 1-14 | 1-14 |
| A | CN 114564018 A (UBTECH ROBOTICS CORP., LTD.) 31 May 2022 (2022-05-31)<br>    entire document | 1-14 |
| A | CN 112909712 A (BEIJING ROBOROCK TECHNOLOGY CO., LTD.) 04 June 2021 (2021-06-04)<br>    entire document | 1-14 |

☑ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 March 2024** | **18 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 629 018 A1

## INTERNATIONAL SEARCH REPORT

International application No.

**PCT/CN2023/136106**

### C. DOCUMENTS CONSIDERED TO BE RELEVANT

| Category* | Citation of document, with indication, where appropriate, of the relevant passages | Relevant to claim No. |
|---|---|---|
| A | CN 108594211 A (SHENYANG SUMBOY INTELLIGENT IMAGING TECHNOLOGY CO., LTD.) 28 September 2018 (2018-09-28)<br>entire document | 1-14 |
| A | KR 101395892 B1 (LG ELECTRONICS INC.) 15 May 2014 (2014-05-15)<br>entire document | 1-14 |
| A | US 2022273152 A1 (DREAME INNOVATION TECHNOLOGY (SUZHOU) CO., LTD.) 01 September 2022 (2022-09-01)<br>entire document | 1-14 |

Form PCT/ISA/210 (second sheet) (July 2022)

## INTERNATIONAL SEARCH REPORT
### Information on patent family members

| International application No. |
| --- |
| **PCT/CN2023/136106** |

| Patent document cited in search report | | | Publication date (day/month/year) | Patent family member(s) | | | Publication date (day/month/year) |
| --- | --- | --- | --- | --- | --- | --- | --- |
| CN | 113376655 | A | 10 September 2021 | | None | | |
| CN | 110353583 | A | 22 October 2019 | WO | 2021031427 | A1 | 25 February 2021 |
| | | | | US | 2022287533 | A1 | 15 September 2022 |
| | | | | EP | 4014829 | A1 | 22 June 2022 |
| | | | | EP | 4014829 | A4 | 12 October 2022 |
| | | | | JP | 2022546289 | A | 04 November 2022 |
| | | | | KR | 20220051370 | A | 26 April 2022 |
| | | | | RU | 2800503 | C1 | 21 July 2023 |
| CN | 112155487 | A | 01 January 2021 | | None | | |
| CN | 114564018 | A | 31 May 2022 | | None | | |
| CN | 112909712 | A | 04 June 2021 | WO | 2022188366 | A1 | 15 September 2022 |
| | | | | EP | 4307496 | A1 | 17 January 2024 |
| CN | 108594211 | A | 28 September 2018 | CN | 208026864 | U | 30 October 2018 |
| KR | 101395892 | B1 | 15 May 2014 | | None | | |
| US | 2022273152 | A1 | 01 September 2022 | KR | 20220086682 | A | 23 June 2022 |
| | | | | WO | 2021212986 | A1 | 28 October 2021 |
| | | | | EP | 4050378 | A1 | 31 August 2022 |
| | | | | EP | 4050378 | A4 | 24 May 2023 |
| | | | | JP | 2023500994 | A | 17 January 2023 |
| | | | | JP | 7383828 | B2 | 20 November 2023 |
| | | | | CN | 111538034 | A | 14 August 2020 |
| | | | | CN | 111538034 | B | 28 May 2021 |

Form PCT/ISA/210 (patent family annex) (July 2022)

**EP 4 629 018 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211536565